# EUROPEAN PATENT APPLICATION

(11) **EP 4 597 951 A1**
(43) Date of publication of application: **06.08.2025**
(21) Application number: 22960089.5
(22) Date of filing: 29.09.2022
(51) Int. Cl.: H04L 27/00

(54) **MULTI-PATH COMMUNICATION METHOD, APPARATUS AND SYSTEM**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2022/122801
(87) International publication number: WO 2024/065452

(57) **Abstract**

A multi-path communication method, apparatus and system, relating to the technical field of mobile communications. A first UE reports measurement information to a network device by means of a direct link with the network device, and determines that a second UE enters a connected state, wherein the second UE is a relay UE added by the network device for the first UE on the basis of channel measurement information, and the first UE is indirectly connected to the network device by means of the second UE. By means of the present method, the problem of how to establish an indirect connection when there is a direct connection between the first UE and the network device in a multi-path scenario is solved, and particularly, the problem of how to enable the relay UE in the indirect connection to enter the connected state is solved.

## Description

### FIELD

The present invention relates to the field of mobile communication technologies, and in particular relates to a multi-path communication method, apparatus and system.

### BACKGROUND

With continuous evolution of the mobile network communication technology, sidelink (SL) communication has been introduced to support direct communication between user equipments (UEs). Multi-path connection is supported in the 3rd Generation Partnership Project (3GPP) R18. Connection between UE and a base station is called direct path, and connection between the UE and the base station via a relay UE is called indirect path. A remote UE may maintain connection with the network via both the direct path and the indirect path. However, in a multi-path scenario, if a radio resource control (RRC) message of the remote UE is sent to the network device via a direct path, it is not clear how the relay UE in a non-connected state can enter a connected state.

### SUMMARY

The present invention provides a multi-path communication method, apparatus and system, which aim to solve problems of how to establish an indirect connection when a direct connection exists between a remote UE and a network device in a multi-path scenario, and in particular, how to make the relay UE in the indirect connection enter a connected state.

According to a first aspect of embodiments of the present invention, there is provided a multi-path communication method, performed by a first UE, including: reporting measurement information to a network device via a direct path between the first UE and the network device; and determining that a second UE enters a radio resource control (RRC) connected state, where the second UE is a relay UE, added by the network device, for the first UE according to the channel measurement information, and an indirect path between the first UE and the network device is established via the second UE.

In some embodiments of the present invention, determining that the second UE enters the RRC connected state includes: establishing a PC5 unicast connection with the second UE; and instructing the second UE to enter the RRC connected state via the PC5 unicast connection.

In some embodiments of the present invention, the method further includes: receiving, via the direct path, first indication information sent by the network device, where the first indication information includes RRC state information of the second UE.

In some embodiments of the present invention, determining that the second UE enters the RRC connected state includes: determining that the RRC state information of the second UE is an RRC non-connected state, and instructing the second UE to enter the RRC connected state via the PC5 unicast connection.

In some embodiments of the present invention, the method further includes: receiving third indication information sent by the network device via the direct path, where the third indication information includes a trigger indication, and the trigger indication is configured to instruct the first UE to trigger the second UE to enter the RRC connected state.

In some embodiments of the present invention, instructing the second UE to enter the RRC connected state via the PC5 unicast connection includes: sending PC5 RRC signaling or PC5 media access control control element (MAC CE) signaling to the second UE via the PC5 unicast connection, where the PC5 RRC signaling or the PC5 MAC CE signaling includes second indication information for instructing the second UE to enter the RRC connected state.

According to a second aspect of embodiments of the present invention, there is provided a multi-path communication method, performed by a network device, including: receiving, via a direct path between a first UE and the network device, measurement information reported by the first UE; and determining a second UE to be added for the first UE according to the measurement information, where the second UE is a relay UE via which an indirect path between the first UE and the network device is established.

In some embodiments of the present invention, determining the second UE to be added for the first UE according to the measurement information includes: determining a second UE in a radio resource control (RRC) connected state according to the measurement information; and adding the second UE in the RRC connected state for the first UE.

In some embodiments of the present invention, the method further includes: sending first indication information to the first UE via the direct path, where the first indication information includes RRC state information of the second UE.

In some embodiments of the present invention, sending the first indication information to the first UE via the direct path includes: sending RRC signaling to the first UE via the direct path, where the RRC signaling includes the first indication information.

In some embodiments of the present invention, the method further includes: determining the RRC state information of the second UE, where the RRC state information includes an RRC connected state and an RRC non-connected state, and the RRC non-connected state includes an RRC idle state and an RRC inactivated state.

In some embodiments of the present invention, the method further includes: sending third indication information to the first UE via the direct path, where the third indication information includes a trigger indication, and the trigger indication is configured to instruct the first UE to trigger the second UE to enter an RRC connected state.

In some embodiments of the present invention, sending the third indication information to the first UE via the direct path includes: sending RRC signaling to the first UE via the direct path, where the RRC signaling includes the third indication information.

According to a third aspect of embodiments of the present invention, there is provided a multi-path communication apparatus, applied to a first UE, including: a transceiving module configured to report measurement information to a network device via a direct path between the first UE and the network device; and a determining module configured to determine that a second UE enters a radio resource control (RRC) connected state, where the second UE is a relay UE, added by the network device, for the first UE according to the channel measurement information, and an indirect path between the first UE and the network device is established via the second UE.

According to a fourth aspect of embodiments of the present invention, there is provided a multi-path communication apparatus, applied to a network device, including: a transceiving module configured to receive, via a direct path between a first UE and the network device, measurement information reported by the first UE; and a determining module configured to determine a second UE to be added for the first UE according to the measurement information, where the second UE is a relay UE via which an indirect path between the first UE and the network device is established.

According to a fifth aspect of embodiments of the present invention, there is provided a communication system, including a network device and a first UE. The first UE is configured to perform the multi-path communication method as described in any one of the embodiments of the first aspect. The network device is configured to perform the multi-path communication method as described in any one of the embodiments of the second aspect.

According to a sixth aspect of embodiments of the present invention, there is provided a communication device. The communication device includes: a transceiver; a memory; and a processor, connected to the transceiver and the memory respectively, configured to execute computer-executable instructions stored on the memory to control radio signal reception and transmission of the transceiver, and to perform the method of the embodiments of the first aspect, the second aspect or the third aspect.

According to a seventh aspect of embodiments of the present invention, there is provided a computer storage medium having stored therein computer-executable instructions that, when executed by a processor, cause the method described in the above embodiments of the first aspect, the second aspect or the third aspect is implemented.

With the multi-path communication method provided by the present invention, the first UE reports the measurement information to the network device via the direct path between the first UE and the network device, and determines that the second UE enters the RRC connected state. The second UE is the relay UE added by the network device for the first UE according to the channel measurement information, and the indirect path between the first UE and the network device is established via the second UE. This solution solves the problem of how to establish the indirect connection in the multi-path scenario if the direct connection exists between the remote UE and the network device, especially how to make the relay UE in the indirect connection enter the RRC connected state.

Additional aspects and advantages of the present invention will be partly set forth in the following description, and will become apparent from the following description or learned by practice of the present invention.

### BRIEF DESCRIPTION OF THE DRAWINGS

The above and/or additional aspects and advantages of the present invention will become apparent and easily understood from the following description of the embodiments in conjunction with the accompanying drawings.
FIG. 1 is a flow chart illustrating a multi-path communication method according to embodiments of the present invention.
FIG. 2 is a flow chart illustrating a multi-path communication method according to embodiments of the present invention.
FIG. 3 is a flow chart illustrating a multi-path communication method according to embodiments of the present invention.
FIG. 4 is a flow chart illustrating a multi-path communication method according to embodiments of the present invention.
FIG. 5 is a flow chart illustrating a multi-path communication method according to embodiments of the present invention.
FIG. 6 is a flow chart illustrating a multi-path communication method according to embodiments of the present invention.
FIG. 7 is a flow chart illustrating a multi-path communication method according to embodiments of the present invention.
FIG. 8 is a flow chart illustrating a multi-path communication method according to embodiments of the present invention.
FIG. 9 is a flow chart illustrating a multi-path communication method according to embodiments of the present invention.
FIG. 10 is an interactive schematic diagram of a multi-path communication method according to embodiments of the present invention.
FIG. 11 is a block diagram illustrating a multi-path communication apparatus according to embodiments of the present invention.
FIG. 12 is a block diagram illustrating a multi-path communication apparatus according to embodiments of the present invention.
FIG. 13 is a block diagram illustrating a multi-path communication apparatus according to embodiments of the present invention.
FIG. 14 is a block diagram illustrating a communication device according to embodiments of the present invention.
FIG. 15 is a block diagram illustrating a chip according to embodiments of the present invention.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements. The embodiments described below with reference to the accompanying drawings are examples and are intended to be used to explain the present invention, and shall not be construed to limit the present invention.

In order to support direct communication between UEs, sidelink (SL) communication is provided, in which an interface between UEs is PC-5. According to a corresponding relationship between a sending UE and a receiving UE, three transmission modes of unicast, multicast and broadcast are supported on the sidelink. Two methods for allocating sending resources for the SL communication exist, one method is dynamic scheduling performed by network, and the other method is that the UE makes an autonomous selection from a resource pool broadcast by the network. The dynamic scheduling means that the network dynamically allocates a sending resource on the SL to the UE according to cached data reported by the UE. The autonomous selection means that the UE randomly selects a sending resource from a resource pool broadcast by the network or pre-configured. The specific allocation method is configured by the network device via RRC signaling. SL communication supports reporting of sidelink UE information (SUI), where SUI is auxiliary information transmitted between the UE and the network. UE in a connected state may report auxiliary information via the SUI to assist the network device in resource configuration, such as signaling resource bearer (SRB) or data resource bearer (DRB) configuration between a terminal and a base station.

UE may communicate with the base station via another UE as a relay without directly connecting to the base station. The UE that is not connected to the base station is called a remote UE, and the UE that provides a relay function is called a relay UE. The remote UE and the relay UE communicate through SL unicast. This architecture is called UE to NW (U2N) relay. R17 UE only supports a single path (link), that is, there can only be one direct path or indirect path. The remote UE uses specified PC5 RLC channel configuration to send a first RRC message (i.e., RRCSetupRequest) via the relay terminal to establish a connection with the network device. If the relay UE is not in an RRC connected (RRC_CONNECTED) state, the relay UE needs to establish a connection first to make itself into a connected state after receiving the message on the specified PC5 RLC channel. During a process of the relay UE establishing the RRC connection, the network device may configure SRB0 relay Uu RLC channel to the relay UE. The remote UE responds to the RRCSetup message. The RRCSetup message is sent to the remote UE through the SRB0 relay channel on Uu and the PC5 RLC channel specified on PC5. Therefore, with R17 U2N architecture, the remote UE may trigger the relay UE to enter the connected state by sending a message on the specified PC5 RLC channel. In addition, with the R17 U2N architecture, the network device may trigger the relay UE to enter the connected state via a paging message.

In order to improve transmission rate and transmission reliability, R18 supports the remote UE to maintain connection with the network via both the direct path and the indirect path at the same time. This function is called multi-path connection. The remote UE needs to be in a connected state to support the multi-path connection. In the multi-path architecture, if RRCSetupRequest of the remote UE is sent to the network device via the direct path, the relay UE in a non-connected state cannot be triggered to enter the connected state by receiving a message from specified PC5 RLC channel. However, in a multi-path scenario, if RRCSetupRequest of the remote UE is sent to the network device via a direct path, it is unclear how the relay UE in the non-connected state enters the connected state.

Accordingly, the present invention provides a multi-path communication method, apparatus and system, which aim to solve problems of how to establish an indirect connection when a direct connection exists between a remote UE and a network device in a multi-path scenario, and in particular, how to make the relay UE in the indirect connection enter a connected state.

It can be understood that the solution provided in the present invention may be used for a fifth generation (5G) mobile communication technology and its subsequent communication technologies, such as an advanced 5G mobile communication technology evolution and a sixth generation (6G) mobile communication technology, which are not limited in the present invention.

The multi-path communication method and apparatus provided by the present invention are described in detail below with reference to the accompanying drawings.

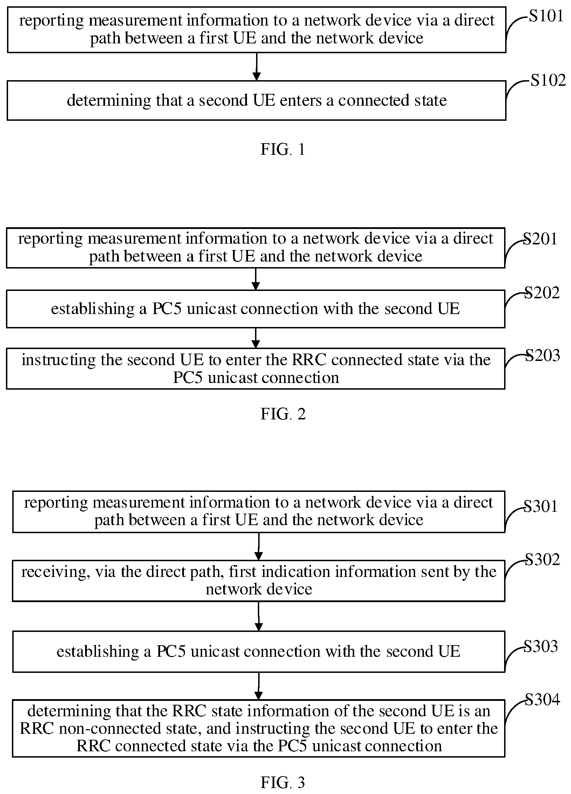

FIG. 1 is a flow chart of a multi-path communication method according to embodiments of the present invention. The method is performed by a first UE. In the embodiments of the present invention, the first UE may be understood as a remote UE. The UE in the present invention includes, but is not limited to, an intelligent terminal, a cellular phone, a wireless device, a handheld device, a mobile unit, a vehicle, a vehicle-mounted device, etc.

As shown in FIG. 1, the method may include the following steps.

In S101, measurement information is reported to a network device via a direct path between the first UE and the network device.

In this embodiment of the present invention, the direct path exists between the first UE and the network device. In other words, the first UE is in a RRC connected state.

The first UE may report measurement information of a reference signal between the first UE and a candidate relay UE to the network device via the direct path. In other words, the first UE triggers a discovery process according to measurement configuration of the network device and reports the measurement result between the first UE and the candidate relay UE to the network device. Specifically, the measurement information may be a result of measurement of the reference signal, such as sidelink reference signal received power (SL-RSRP) and/or sidelink discovery reference signal received power (SD-RSRP), which is not limited in the present invention. It should be understood that the first UE may report measurement results of multiple candidate relay UEs to allow the network device to determine, according to the measurement information reported by the first UE, the second UE, selected from the multiple candidate relay UEs, to be added for the first UE, and the indirect path between the network device and the first UE is established via the second UE added by the network device.

In S102, determining that a second UE enters a RRC connected state.

In the present invention, the second UE is a relay UE added by the network device for the first UE according to the channel measurement information, and the indirect path between the first UE and the network device is established via the second UE.

In the present invention, the network device may add the relay UE (the second UE) for the remote UE (the first UE), and the first UE may determine that the second UE added by the network device is in an RRC connected state.

In an optional embodiment, the network device may be limited to add a UE in the RRC connected state as the second UE for the first UE. In this case, the first UE may directly determine that the second UE is in the RRC connected state without instructing the second UE to enter the RRC connected state again.

In another optional embodiment, the network device may add a UE in an RRC non-connected state as the second UE for the first UE, where the RRC non-connected state includes an RRC idle state and an RRC inactive state. If the network device adds a UE in the RRC non-connected state as the second UE for the first UE, the network device triggers the second UE to enter an RRC connected state by sending a paging message to the second UE. The first UE does not need to instruct the second UE to enter the RRC connected state.

In another example, the network device informs the first UE of an RRC state of the second UE, and the first UE determines whether it should trigger the second UE to enter the RRC connected state according to the RRC state of the second UE. For example, if the first UE determines that the second UE is in the RRC connected state, the second UE is not instructed to enter the RRC connected state; and if the first UE determines that the second UE is in the RRC non-connected state, the second UE is instructed to enter the RRC connected state.

In another example, the network indicates, with indication information, whether the first UE needs to trigger the second UE to enter the RRC connected state. If the first UE receives an indication from the network device that the first UE is required to trigger the second UE to enter the RRC connected state, the first UE instructs the second UE to enter the RRC connected state. If the first UE receives an indication from the network device that the first UE is not required to trigger the second UE to enter the RRC connected state, the first UE does not instruct the second UE to enter the RRC connected state.

In another implementation, the first UE may unconditionally instruct the second UE to enter the RRC connected state without network indication. For example, no matter what type of second UE the network device adds for the first UE, the first UE instructs the second UE to enter the RRC connected state, and the second UE may make a corresponding response. If the second UE is in the RRC non-connected state, it is triggered to entry into the RRC connected state. If the second UE has already been in the RRC connected state, no action is taken.

In another possible implementation, the second UE receives a message sent by the first UE through a specific PC5 RLC channel, for example, a message of RRCReconfigurationComplete sent by the first UE through a specific RLC channel, the second UE is triggered to enter the RRC connected state.

In this embodiment, there is no specific limitation on how the first UE determines that the second UE is in the RRC connected state.

In summary, with the multi-path communication method provided by the present invention, the first UE reports the measurement information to the network device via the direct path between the first UE and the network device, and determines that the second UE enters the RRC connected state. The second UE is the relay UE added by the network device for the first UE according to the channel measurement information, and the indirect path between the first UE and the network device is established via the second UE. This solution solves the problem of how to establish the indirect connection in the multi-path scenario if the direct connection exists between the remote UE and the network device, especially how to make the relay UE in the indirect connection enter the RRC connected state.

FIG. 2 is a flow chart illustrating a multi-path communication method according to embodiments of the present invention. The method is performed by the first UE. As shown in FIG. 2, which is based on the embodiment shown in FIG. 1, the method of FIG. 2 is a specific implementation example of the embodiment of FIG. 1 and may include the following steps.

In S201, measurement information is reported to a network device via a direct path between the first UE and the network device.

The principle of the above S201 is the same as that of S101 in the embodiment shown in FIG. 1, and will not be described again herein.

In S202, a PC5 unicast connection with the second UE is established.

In an embodiment of the present invention, the network device adds the second UE for the first UE via RRC signaling, and the first UE establishes the PC5 unicast connection (i.e., a PC5-RRC connection) with the second UE added by the network device.

In S203, the second UE is instructed to enter the RRC connected state via the PC5 unicast connection.

In an embodiment of the present invention, the first UE can directly instruct the second UE to enter the RRC connected state through indication information. That is, no matter the second UE added, by the network device, for the first UE is in the RRC connected state or the RRC non-connected state, the first UE instructs the second UE to enter the RRC connected state via the PC5 unicast connection.

S203 may include: sending PC5 RRC signaling or PC5 media access control control element (MAC CE) signaling to the second UE via the PC5 unicast connection, where the PC5 RRC signaling or the PC5 MAC CE signaling includes second indication information for instructing the second UE to enter the RRC connected state.

Specifically, the PC5-RRC signaling may be RRCReconfigurationSidelink signaling or RRCReconfigurationCompleteSidelink signaling or newly defined PC5-RRC signaling, which is not limited in the present invention.

In addition, the second indication information may be a 1-bit explicit indication, for example, enabling the second UE to enter the RRC connected state, or instructing the second UE to enter the RRC connected state through an integer 1. Another implementation is, for example, carried by the PC5 MAC CE signaling, the size of which is 0 bit, and is identified by a logical channel identity (LCID) carried in a MAC sub-header. When the second UE receives the MAC CE, it is triggered to enter into the RRC connected state.

In summary, with the multi-path communication method provided by the present invention, the first UE reports the measurement information to the network device via the direct path between the first UE and the network device, establishes the PC5 unicast connection with the second UE, and instructs the second UE to enter the RRC connected state via the PC5 unicast connection. In this solution, the first UE instructs the second UE to enter the connected state without intervention of the network device. The first UE may automatically trigger the second UE to enter the connected state without indication from the network device, thus saving radio signaling, and solving the problem of how to establish the indirect connection in the multi-path scenario if the direct connection between the remote UE and the network device exists, especially how to make the relay UE in the indirect connection enter the RRC connected state.

FIG. 3 is a flow chart illustrating a multi-path communication method according to embodiments of the present invention. The method is performed by the first UE. As shown in FIG. 3, which is based on the embodiment shown in FIG. 1, the method of FIG. 3 is a specific implementation example of the embodiment of FIG. 1 and may include the following steps.

In S301, measurement information is reported to a network device via a direct path between the first UE and the network device.

The principle of the above S301 is the same as that of S101 in the embodiment shown in FIG. 1, and will not be described again herein.

In S302, first indication information sent by the network device is received via the direct path.

The first indication information includes RRC state information of the second UE.

In an embodiment of the present invention, the network device may send the RRC state information of the second UE to the first UE. In other words, the network device determines the RRC state of the second UE added for the first UE, and indicates the RRC state of the second UE to the first UE via the indication information. In an example, the first indication information may be carried by RRC signaling, and the RRC signaling may be RRCReconfiguration signaling. In an example, the first indication information may be carried in RRC signaling, and the RRC signaling is RRC signaling for the network device to add the second UE as the relay UE for the first UE.

In an embodiment of the present invention, the RRC state information includes an RRC connected state and an RRC non-connected state, and the RRC non-connected state includes an idle state (i.e., IDLE state) and an inactive state (i.e., INACTIVE state). The first indication information may be 2 bits or 3 bits, and the 2-bit indication information may indicate that the second UE is in the RRC connected state and the RRC non-connected state via 1 and 0, respectively, where a state corresponding to the specific 0 or 1 is not limited. The 3-bit indication information may indicate that the second UE is in the RRC connected state, the RRC idle state, and the RRC inactive state via 0, 1, and 2, respectively, where a state corresponding to the specific 0, 1, and 2 is not limited.

In S303, a PC5 unicast connection with the second UE is established.

In an embodiment of the present invention, the network device adds the second UE for the first UE via the RRC signaling, and the first UE establishes the PC5 unicast connection (i.e., PC5-RRC connection) with the second UE added by the network side.

In S304: it is determined that the RRC state information of the second UE is an RRC non-connected state, and the second UE is instructed to enter the RRC connected state via the PC5 unicast connection.

It may be understood that S304 is an optional step. When the RRC state information of the second UE sent by the network device to the first UE indicates that the second UE is in the RRC connected state, the first UE no longer needs to instruct the second UE to enter the RRC connected state. In an embodiment of the present invention, the first UE may determine whether to instruct the second UE to enter the RRC connected state based on the RRC state information of the second UE indicated by the network device. For example, when the first UE determines that the RRC state information of the second UE indicated by the network device is the RRC non-connected state, the first UE may instruct the second UE to enter the RRC connected state via the PC5 unicast connection.

S304 may include: sending PC5 RRC signaling or PC5 MAC CE signaling to the second UE via the PC5 unicast connection, where the PC5 RRC signaling or the PC5 MAC CE signaling includes second indication information for instructing the second UE to enter the RRC connected state.

Specifically, the PC5-RRC signaling may be RRCReconfigurationSidelink signaling or RRCReconfigurationCompleteSidelink signaling or newly defined PC5-RRC signaling, which is not limited in the present invention.

In addition, the second indication information may be a 1-bit explicit indication, for example, enabling the second UE to enter the RRC connected state, or instructing the second UE to enter the RRC connected state through an integer 1. Another implementation is, for example, carried by the PC5 MAC CE signaling, the size of which is 0 bit, and is identified by a logical channel identity (LCID) carried in a MAC sub-header. When the second UE receives the MAC CE, it is triggered to enter into the RRC connected state.

In summary, with the multi-path communication method provided by the present invention, the first UE reports the measurement information to the network device via the direct path between the first UE and the network device, establishes the PC5 unicast connection with the second UE, and instructs the second UE to enter the RRC connected state via the PC5 unicast connection. In this solution, the first UE may determine whether to instruct the second UE to enter the RRC connected state based on the first indication information sent by the network device, thus avoiding the redundant step of blindly triggering the second UE to enter the RRC connected state without knowing the RRC state information of the second UE, improving efficiency of the multi-path communication, and solving the problem of how to establish the indirect connection in the multi-path scenario if the direct connection between the remote UE and the network device exists, especially how to make the second UE in the indirect connection enter the RRC connected state.

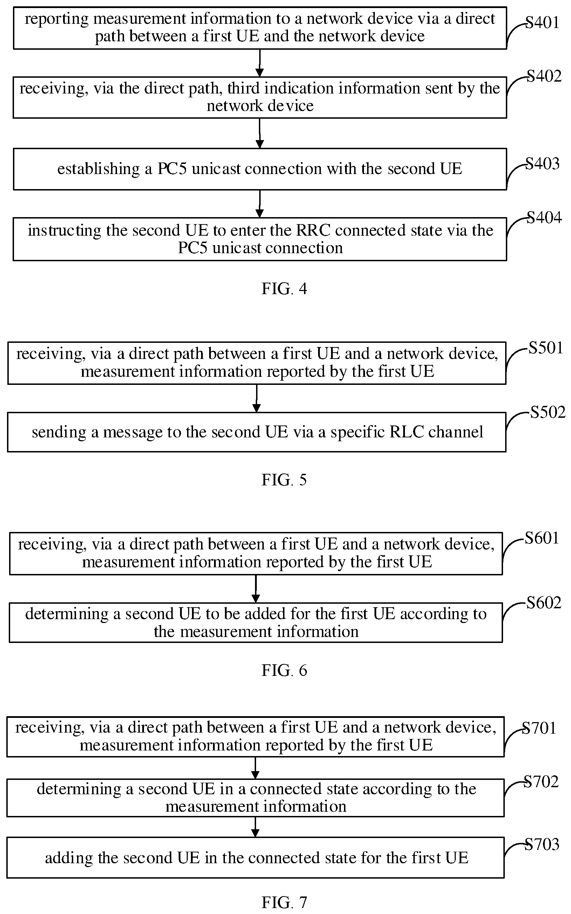

FIG. 4 is a flow chart illustrating a multi-path communication method according to embodiments of the present invention. The method is performed by the first UE. As shown in FIG. 4, which is based on the embodiment shown in FIG. 1, the method of FIG. 4 is a specific implementation example of the embodiment of FIG. 1 and may include the following steps.

In S401, measurement information is reported to a network device via a direct path between the first UE and the network device.

The principle of the above S401 is the same as that of S101 in the embodiment shown in FIG. 1, and will not be described again herein.

In S402, third indication information sent by the network device is received via the direct path.

The third indication information includes a trigger indication, and the trigger indication is configured to instruct the first UE to trigger the second UE to enter the RRC connected state.

In an embodiment of the present invention, the network device may send the trigger indication to the first UE. In other words, the network device directly indicates to the first UE whether the first UE needs to trigger the second UE to enter the RRC connected state. In an example, the third indication information may be carried by RRC signaling, and the RRC signaling may be RRCReconfiguration signaling. In an example, the first indication information may be carried in RRC signaling, and the RRC signaling is RRC signaling of the network device to add the second UE as the second UE for the first UE.

In an embodiment of the present invention, the third indication information may be 1 bit, for example, enable or 1, indicating that the first UE needs to trigger the second UE to enter the RRC connected state. If the indication information is default (i.e., absent), that is, the first UE has not received the third indication information, the first UE does not need to trigger the second UE to enter the RRC connected state. Alternatively, the third indication information may be 2 bits, for example, (enable, disable) or (0, 1), where enable or 1 is used to indicate that the first UE needs to trigger the second UE to enter the RRC connected state. In other words, when the first UE receives the third indication information being enable or 1, it performs a subsequent step to trigger the second UE to enter the RRC connected state. When the third indication information received by the first UE is disable or 0, the first UE does not trigger the second UE to enter the RRC connected state.

In S403, a PC5 unicast connection with the second UE is established.

In an embodiment of the present invention, the network device adds the second UE for the first UE via RRC signaling, and the first UE establishes the PC5 unicast connection (i.e., a PC5-RRC connection) with the second UE added by the network device.

In S404, the second UE is instructed to enter the RRC connected state via the PC5 unicast connection.

It may be understood that S404 is an optional step. When the third indication information is default (i.e., absent), that is, the first UE has not received the trigger indication from the network device, which instructs the first UE to trigger the second UE to enter the RRC connected state, or when the third indication information indicates that the first UE does not need to trigger the second UE to enter the RRC connected state, the first UE no longer needs to instruct the second UE to enter the RRC connected state.

In an embodiment of the present invention, the first UE may determine whether to instruct the second UE to enter the RRC connected state according to the trigger indication indicated by the network device. For example, if the third indication information received by the first UE indicates enable or 1, the first UE may instruct the second UE to enter the RRC connected state via the PC5 unicast connection.

S404 may include: sending PC5 RRC signaling or PC5 MAC CE signaling to the second UE via the PC5 unicast connection, where the PC5 RRC signaling or the PC5 MAC CE signaling includes second indication information for instructing the second UE to enter the RRC connected state.

Specifically, the PC5-RRC signaling may be RRCReconfigurationSidelink signaling or RRCReconfigurationCompleteSidelink signaling or newly defined PC5-RRC signaling, which is not limited in the present invention.

In addition, the second indication information may be a 1-bit explicit indication, for example, enabling the second UE to enter the RRC connected state, or instructing the second UE to enter the RRC connected state through an integer 1. Another implementation is, for example, carried by the PC5 MAC CE signaling, the size of which is 0 bit, and is identified by a logical channel identity (LCID) carried in a MAC sub-header. When the second UE receives the MAC CE, it is triggered to enter into the RRC connected state.

In summary, with the multi-path communication method provided by the present invention, the first UE reports the measurement information to the network device via the direct path between the first UE and the network device, establishes the PC5 unicast connection with the second UE, and instructs the second UE to enter the RRC connected state via the PC5 unicast connection. In this solution, the first UE may determine whether to instruct the second UE to enter the RRC connected state according to the third indication information sent by the network device, avoiding the redundant step of blindly triggering the second UE to enter the RRC connected state without indication, improving efficiency of the multi-path communication, and solving the problem of how to establish the indirect connection in the multi-path scenario if the direct connection between the remote UE and the network device exists, especially how to make the relay UE in the indirect connection enter the RRC connected state.

FIG. 5 is a flow chart illustrating a multi-path communication method according to embodiments of the present invention. The method is performed by the first UE. As shown in FIG. 5, which is based on the embodiment shown in FIG. 1, the method of FIG. 5 is a specific implementation example of the embodiment of FIG. 1 and may include the following steps.

In S501, measurement information is reported to a network device via a direct path between the first UE and the network device.

The principle of the above S501 is the same as that of S101 in the embodiment shown in FIG. 1, and will not be described again herein.

In S502, a message is sent to the second UE via a specific RLC channel.

In an embodiment of the present invention, the message is used to trigger the second UE to enter the RRC connected state. Specifically, the message may be an RRCReconfigurationComplete message, and the RLC channel may be a specific PC5 RLC channel.

In summary, with the multi-path communication method provided by the present invention, the first UE reports the measurement information to the network device via the direct path between the first UE and the network device, and sends the message via the specific PC5 RLC channel to trigger the second UE to enter the connected state. In this solution, the first UE instructs the second UE to enter the connected state without intervention of the network device. The first UE may automatically trigger the second UE to enter the connected state without indication from the network device, thus saving radio signaling, and solving the problem of how to establish the indirect connection in the multi-path scenario if the direct connection between the remote UE and the network device exists, especially how to make the relay UE in the indirect connection enter the RRC connected state.

FIG. 6 is a flow chart illustrating a multi-path communication method according to embodiments of the present invention. The method is performed by a network device. As shown in FIG. 6, the method may include the following steps.

In S601, measurement information reported by a first UE is received via a direct path between the first UE and the network device.

In this embodiment of the present invention, the direct path exists between the first UE and the network device. The network device may receive the measurement information of a channel between the first UE and a candidate relay UE reported by the first UE via the direct path. In other words, the first UE triggers a discovery process according to measurement configuration of the network device and reports the measurement result between the first UE and the candidate relay UE to the network device. Specifically, the measurement information may be a result of measurement of a reference signal, such as sidelink reference signal received power (SL-RSRP) and/or sidelink discovery reference signal received power (SD-RSRP), which is not limited in the present invention. It should be understood that the first UE may report measurement results of multiple candidate relay UEs to allow the network device to determine, according to the measurement information reported by the first UE, the second UE (selected from the multiple candidate relay UEs) to be added for the first UE, and the indirect path between the network device and the first UE is established via the second UE added by the network device.

In S602, a second UE to be added for the first UE is determined according to the measurement information.

In the present invention, the second UE is a relay UE via which an indirect path between the first UE and the network device is established.

It may be understood that after the network device adds the second UE for the first UE, the first UE may further determine that the second UE added by the network device is in an RRC connected state. In the present invention, the network device may be defined to add a UE in the RRC connected state as the second UE for the first UE. In this case, the first UE may directly determine that the second UE is in the RRC connected state without instructing the second UE to enter the RRC connected state again.

In another optional embodiment, the network device may add a UE in an RRC non-connected state as the second UE for the first UE, where the RRC non-connected state includes an RRC idle state and an RRC inactive state. If the network device adds the UE in the RRC non-connected state as the second UE for the first UE, the network device triggers the second UE to enter an RRC connected state by sending a paging message to the second UE. The first UE does not need to instruct the second UE to enter the RRC connected state.

In another example, the network device informs the first UE of an RRC state of the second UE, and the first UE determines whether it should trigger the second UE to enter the RRC connected state according to the RRC state of the second UE. For example, if the first UE determines that the second UE is in the RRC connected state, the second UE is not instructed to enter the RRC connected state; and if the first UE determines that the second UE is in the RRC non-connected state, the second UE is instructed to enter the RRC connected state.

In another example, the network indicates, with indication information, whether the first UE needs to trigger the second UE to enter the RRC connected state. If the first UE receives an indication from the network device that the first UE is required to trigger the second UE to enter the RRC connected state, the first UE instructs the second UE to enter the RRC connected state. If the first UE receives an indication from the network device that the first UE is not required to trigger the second UE to enter the RRC connected state, the first UE does not instruct the second UE to enter the RRC connected state.

In another implementation, the first UE may unconditionally instruct the second UE to enter the RRC connected state without network indication. For example, no matter what type of second UE the network device adds for the first UE, the first UE instructs the second UE to enter the RRC connected state, and the second UE may make a corresponding response. If the second UE is in the RRC non-connected state, it is triggered to entry into the RRC connected state. If the second UE has already been in the RRC connected state, no action is taken.

In this embodiment, there is no specific limitation on how the first UE determines that the second UE is in the RRC connected state.

In summary, with the multi-path communication method provided by the present invention, the network device receives the measurement information reported by the first UE via the direct path between the first UE and the network device, and determines the second UE added for the first UE according to the measurement information. The second UE is the relay UE via which an indirect path between the first UE and the network device is established. This solution solves the problem of how to establish the indirect connection in the multi-path scenario if the direct connection exists between the remote UE and the network device, especially how to make the relay UE in the indirect connection enter the RRC connected state.

FIG. 7 is a flow chart illustrating a multi-path communication method according to embodiments of the present invention. The method is performed by the network device. As shown in FIG. 7, which is based on the embodiment shown in FIG. 6, the method may include the following steps.

In S701, measurement information reported by a first UE is received via a direct path between the first UE and the network device.

The principle of the above S701 is the same as that of S601 in the embodiment shown in FIG. 6, and will not be described again herein.

In S702, a second UE in an RRC connected state is determined according to the measurement information.

In an embodiment of the present invention, the network device may first determine RRC state information of the second UE to be added in the process of determining the second UE to be added for the first UE. For example, the RRC state includes an RRC connected state and an RRC non-connected state. The RRC non-connected state includes an RRC idle state and an RRC inactivated state.

In S703, the second UE in the RRC connected state is added for the first UE.

In an embodiment of the present invention, the network device is defined to add only the second UE that is already in the RRC connected state for the first UE as a relay UE in the indirect path between the first UE and the network device.

In summary, with the multi-path communication method provided by the present invention, the network device is defined to add the second UE in the RRC connected state for the first UE. The first UE may directly determine that the second UE is in the RRC connected state without the need for the first UE to instruct the second UE to enter the RRC connected state. This solution avoids the redundant step of the first UE blindly triggering the second UE to enter the RRC connected state, improving efficiency of the multi-path communication, and solving the problem of how to establish the indirect connection in the multi-path scenario if the direct connection between the remote UE and the network device exists, especially how to make the relay UE in the indirect connection enter the RRC connected state.

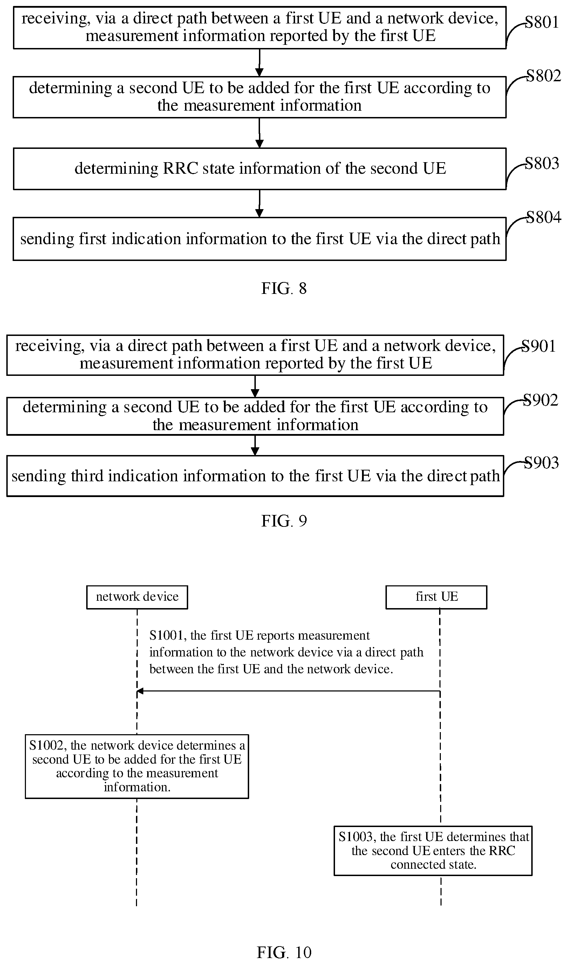

FIG. 8 is a flow chart illustrating a multi-path communication method according to embodiments of the present invention. The method is performed by the network device. As shown in FIG. 8, which is based on the embodiment shown in FIG. 6, the method may include the following steps.

In S801, measurement information reported by a first UE is received via a direct path between the first UE and the network device.

In S802, a second UE to be added for the first UE is determined according to the measurement information.

The principle of the above S801 and S803 is the same as that of S601 and S602 in the embodiment shown in FIG. 6, and will not be described again herein.

In S803, RRC state information of the second UE is determined.

The RRC state information includes an RRC connected state and an RRC non-connected state. The RRC non-connected state includes an RRC idle state and an RRC inactivated state.

In S804, first indication information is sent to the first UE via the direct path.

The first indication information includes RRC state information of the second UE.

Specifically, an RRC signaling is sent to the first UE via the direct path, where the RRC signaling includes the first indication information.

In an embodiment of the present invention, the network device may send the RRC state information of the second UE to the first UE. In other words, the network device determines the RRC state of the second UE added for the first UE, and indicates the RRC state of the second UE to the first UE via the indication information. In an example, the first indication information may be carried by RRC signaling, and the RRC signaling may be RRCReconfiguration signaling. In an example, the first indication information may be carried in RRC signaling, and the RRC signaling is RRC signaling for the network device to add the second UE as the relay UE for the first UE.

In an embodiment of the present invention, the first indication information may be 2 bits or 3 bits. The 2-bit indication information may indicate that the second UE is in the RRC connected state and the RRC non-connected state via 1 and 0, respectively, where a state corresponding to the specific 0 or 1 is not limited. The 3-bit indication information may indicate that the second UE is in the RRC connected state, the RRC idle state, and the RRC inactive state via 0, 1, and 2, respectively, where a state corresponding to the specific 0, 1, and 2 is not limited.

In summary, with the multi-path communication method provided by the present invention, the network device receives the measurement information reported by the first UE via the direct path between the network device and the first UE, and determines the second UE added for the first UE according to the measurement information, where the second UE is the relay UE via which the indirect path between the first UE and the network device is established. In this solution, the network device may send the first indication information to the first UE to assist the first UE in determining whether to instruct the second UE to enter the RRC connected state, avoiding the redundant step of blindly triggering the second UE to enter the RRC connected state without knowing the RRC state information of the second UE, thus improving efficiency of the multi-path communication, and solving the problem of how to establish the indirect connection in the multi-path scenario if the direct connection between the remote UE and the network device exists, especially how to make the second UE in the indirect connection enter the RRC connected state.

FIG. 9 is a flow chart illustrating a multi-path communication method according to embodiments of the present invention. The method is performed by the network device. As shown in FIG. 9, which is based on the embodiment shown in FIG. 6, the method may include the following steps.

In S901, measurement information reported by a first UE is received via a direct path between the first UE and the network device.

In S902, a second UE to be added for the first UE is determined according to the measurement information.

The principle of the above S901 and S902 is the same as that of S601 and S602 in the embodiment shown in FIG. 6, and will not be described again herein.

In S903, third indication information is sent to the first UE via the direct path.

The third indication information includes a trigger indication, and the trigger indication is configured to instruct the first UE to trigger the second UE to enter an RRC connected state.

Specifically, the network device may send RRC signaling to the first UE via the direct path, where the RRC signaling includes the third indication information.

In an embodiment of the present invention, the network device may send the trigger indication to the first UE. In other words, the network device directly indicates to the first UE whether the first UE needs to trigger the second UE to enter the RRC connected state. In an example, the third indication information may be carried by RRC signaling, and the RRC signaling may be RRCReconfiguration signaling. In an example, the first indication information may be carried in RRC signaling, and the RRC signaling is RRC signaling of the network device to add the second UE as the relay UE for the first UE.

In an embodiment of the present invention, the third indication information may be 1 bit, for example, enable or 1, indicating that the first UE needs to trigger the second UE to enter the RRC connected state. If the indication information is default (i.e., absent), that is, the first UE has not received the third indication information, the first UE does not need to trigger the second UE to enter the RRC connected state. Alternatively, the third indication information may be 2 bits, for example, (enable, disable) or (0, 1), where enable or 1 is used to indicate that the first UE needs to trigger the second UE to enter the RRC connected state. In other words, when the first UE receives the third indication information being enable or 1, it performs a subsequent step to trigger the second UE to enter the RRC connected state. When the third indication information received by the first UE is disable or 0, the first UE does not trigger the second UE to enter the RRC connected state.

In summary, with the multi-path communication method provided by the present invention, the network device receives the measurement information reported by the first UE via the direct path between the network device and the first UE, and determines the second UE added for the first UE according to the measurement information, where the second UE is the relay UE via which the indirect path between the first UE and the network device is established. In this solution, the network device may send the third indication information to the first UE to assist the first UE in determining whether to instruct the second UE to enter the RRC connected state, avoiding the redundant step of blindly triggering the second UE to enter the RRC connected state without indication, thus improving efficiency of the multi-path communication, and solving the problem of how to establish the indirect connection in the multi-path scenario if the direct connection between the remote UE and the network device exists, especially how to make the second UE in the indirect connection enter the RRC connected state.

FIG. 10 is an interactive schematic diagram of a multi-path communication method according to embodiments of the present invention. The method is performed by a communication system including a network device and a first UE. As shown in FIG. 10, the method may include the following steps.

In S1001, the first UE reports measurement information to the network device via a direct path between the first UE and the network device.

In S1002, the network device determines a second UE to be added for the first UE according to the measurement information.

In S1003, the first UE determines that the second UE enters the RRC connected state.

The principle of the above S1001 to S1003 is the same as that of the embodiments shown in FIG. 1 to FIG. 9, which will not be described in detail here.

In summary, with the multi-path communication method provided by the present invention, the first UE reports the measurement information to the network device via the direct path between the first UE and the network device, the network device determines the second UE added for the first UE according to the measurement information, the first UE determines that the second UE enters the RRC connected state, and the indirect path between the first UE and the network device is established via the second UE. This solution solves the problem of how to establish the indirect connection in the multi-path scenario if the direct connection between the remote UE and the network device exists, especially how to make the relay UE in the indirect connection enter the RRC connected state.

In the above embodiments provided by the present invention, the methods provided by the embodiments of the present invention are introduced from the perspectives of the first UE and the network device. In order to implement the functions of the methods provided by the above embodiments of the present invention, the network device and the first UE may include a hardware structure and a software module, and implement the above functions in the form of a hardware structure, a software module, or a hardware structure plus a software module. A function of the above functions may be executed in the form of a hardware structure, a software module, or a hardware structure plus a software module.

Corresponding to the multi-path communication methods provided in the above-mentioned embodiments, the present invention further provides a multi-path communication apparatus. Since the multi-path communication apparatus provided in the embodiments of the present invention corresponds to the multi-path communication method provided in the above-mentioned embodiments, implementations of the multi-path communication method are also applicable to the multi-path communication apparatus provided in this embodiment and will not be described in detail here.

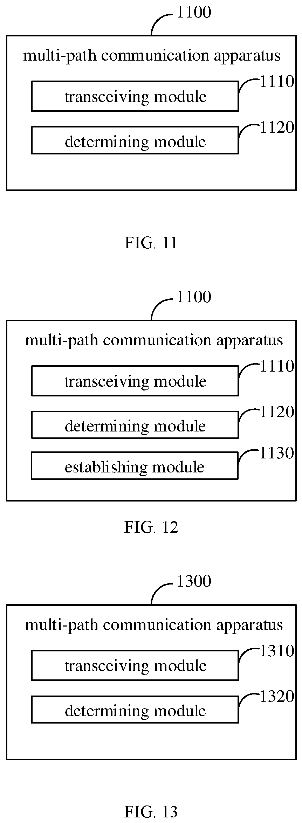

FIG. 11 is a block diagram illustrating a multi-path communication apparatus 1100 according to embodiments of the present invention. The multi-path communication apparatus 1100 may be applied to a first UE.

As shown in FIG. 11, the apparatus 1100 may include: a transceiving module 1110 configured to report measurement information to the network device via a direct path between the first UE and the network device; and a determining module 1120 configured to determine that a second UE enters an RRC connected state, where the second UE is a relay UE, added by the network device, for the first UE according to the channel measurement information, and an indirect path between the first UE and the network device is established via the second UE.

According to the multi-path communication apparatus provided by the embodiments of the present invention, the first UE reports the measurement information to the network device via the direct path between the first UE and the network device, determines that the second UE enters the RRC connected state, where the second UE is the relay UE added by the network device for the first UE according to the channel measurement information, and the indirect path between the first UE and the network device is established via the second UE. This solution solves the problem of how to establish the indirect connection in the multi-path scenario if the direct connection exists between the remote UE and the network device, especially how to make the relay UE in the indirect connection enter the RRC connected state.

In some embodiments, as shown in FIG. 12, the apparatus 1100 further includes an establishing module 1130 configured to establish a PC5 unicast connection with the second UE; and instruct the second UE to enter an RRC connected state via the PC5 unicast connection.

In some embodiments, the transceiving module 1110 is further configured to receive, via the direct path, first indication information sent by the network device, where the first indication information includes RRC state information of the second UE.

In some embodiments, the processing module 1120 is further configured to determine that the RRC state information of the second UE is an RRC non-connected state, and instruct the second UE to enter the RRC connected state via the PC5 unicast connection.

In some embodiments, the processing module 1120 is further configured to send PC5 RRC signaling or PC5 MAC CE signaling to the second UE via the PC5 unicast connection, where the PC5 RRC signaling or the PC5 MAC CE signaling includes second indication information for instructing the second UE to enter the RRC connected state.

In some embodiments, the transceiving module 1110 is further configured to receive third indication information sent by the network device via the direct path, where the third indication information includes a trigger indication, and the trigger indication is configured to instruct the first UE to trigger the second UE to enter the RRC connected state.

In some embodiments, the transceiving module 1110 is further configured to send a message to the second UE via a specific RLC channel, where the message is configured to trigger the second UE to enter the RRC connected state. Specifically, the message may be an RRCReconfigurationComplete message, and the RLC channel may be a specific PC5 RLC channel.

In summary, based on the multi-path communication apparatus provided by the present invention, using the multi-path communication method provided by the present invention, the first UE reports the measurement information to the network device via the direct path between the first UE and the network device, establishes the PC5 unicast connection with the second UE, and instructs the second UE to enter the RRC connected state via the PC5 unicast connection. In this solution, the first UE may determine whether to instruct the second UE to enter the RRC connected state according to the first indication information sent by the network device, avoiding the redundant step of blindly triggering the second UE to enter the RRC connected state without knowing the state information of the second UE, improving efficiency of the multi-path communication, and solving the problem of how to establish the indirect connection in the multi-path scenario if the direct connection between the remote UE and the network device exists, especially how to make the relay UE in the indirect connection enter the RRC connected state.

In addition, the first UE reports the measurement information to the network device via the direct path between the first UE and the network device, establishes the PC5 unicast connection with the second UE, and instructs the second UE to enter the RRC connected state via the PC5 unicast connection. In this solution, the first UE may determine whether to instruct the second UE to enter the RRC connected state according to the third indication information sent by the network device, avoiding the redundant step of blindly triggering the second UE to enter the RRC connected state without indication, improving efficiency of the multi-path communication, and solving the problem of how to establish the indirect connection in the multi-path scenario if the direct connection between the remote UE and the network device exists, especially how to make the relay UE in the indirect connection enter the RRC connected state.

In addition, the first UE reports the measurement information to the network device via the direct path between the first UE and the network device, and sends the message via the specific PC5 RLC channel to trigger the second UE to enter the connected state. In this solution, the first UE instructs the second UE to enter the connected state without intervention of the network device. The first UE may automatically trigger the second UE to enter the connected state without indication from the network device, thus saving radio signaling, and solving the problem of how to establish the indirect connection in the multi-path scenario if the direct connection between the remote UE and the network device exists, especially how to make the relay UE in the indirect connection enter the RRC connected state.

FIG. 13 is a block diagram illustrating a multi-path communication apparatus 1300 according to embodiments of the present invention. The multi-path communication apparatus 1300 may be applied to a network device.

As shown in FIG. 13, the apparatus 1300 includes: a transceiving module 1310 configured to receive, via a direct path between a first UE and the network device, measurement information reported by the first UE; and a determining module 1320 configured to determine a second UE to be added for the first UE according to the measurement information, where the second UE is a relay UE via which an indirect path between the first UE and the network device is established.

With the multi-path communication apparatus provided by the present invention, the network device receives the measurement information reported by the first UE via the direct path between the first UE and the network device, and determines the second UE added for the first UE according to the measurement information. The second UE is the relay UE via which an indirect path between the first UE and the network device is established. This solution solves the problem of how to establish the indirect connection in the multi-path scenario if the direct connection exists between the remote UE and the network device, especially how to make the relay UE in the indirect connection enter the RRC connected state.

In some embodiments, the determining module 1320 is further configured to determine a second UE in an RRC connected state according to the measurement information; and add the second UE in the RRC connected state for the first UE.

In some embodiments, the transceiving module 1310 is further configured to send first indication information to the first UE via the direct path, where the first indication information includes RRC state information of the second UE.

In some embodiments, the transceiving module 1310 is further configured to send RRC signaling to the first UE via the direct path, where the RRC signaling includes the first indication information.

In some embodiments, the determining module 1320 is further configured to determine the RRC state information of the second UE, where the RRC state information includes an RRC connected state and an RRC non-connected state, and the RRC non-connected state includes an RRC idle state and an RRC inactivated state.

In some embodiments, the transceiving module 1310 is further configured to send third indication information to the first UE via the direct path, where the third indication information includes a trigger indication, and the trigger indication is configured to instruct the first UE to trigger the second UE to enter an RRC connected state.

In summary, based on the multi-path communication apparatus provided by the present invention, the network device is defined to add the second UE in the RRC connected state for the first UE. The first UE may directly determine that the second UE is in the RRC connected state without the need for the first UE to instruct the second UE to enter the RRC connected state. This solution avoids the redundant step of the first UE blindly triggering the second UE to enter the RRC connected state, improving efficiency of the multi-path communication, and solving the problem of how to establish the indirect connection in the multi-path scenario if the direct connection between the remote UE and the network device exists, especially how to make the relay UE in the indirect connection enter the RRC connected state.

In addition, the network device receives the measurement information reported by the first UE via the direct path between the network device and the first UE, and determines the second UE added for the first UE according to the measurement information, where the second UE is the relay UE via which the indirect path between the first UE and the network device is established. In this solution, the network device may send the first indication information or the third indication information to the first UE to assist the first UE in determining whether to instruct the second UE to enter the RRC connected state, avoiding the redundant step of blindly triggering the second UE to enter the RRC connected state without knowing the RRC state information of the second UE, thus improving efficiency of the multi-path communication, and solving the problem of how to establish the indirect connection in the multi-path scenario if the direct connection between the remote UE and the network device exists, especially how to make the second UE in the indirect connection enter the RRC connected state.

An embodiment of the present invention further provides a communication system, which includes a network device and a first UE, where the system includes the multi-path communication apparatus as shown in the embodiments of FIG. 11 to FIG. 13, and is configured to execute the multi-path communication method as shown in the embodiments of FIG. 1 to FIG. 10.

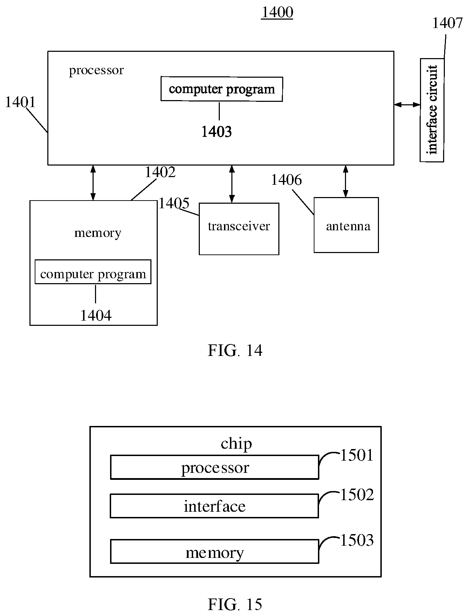

Referring to FIG. 14, FIG. 14 is a block diagram illustrating a communication device 1400 according to embodiments of the present invention. The communication device 1400 may be a network device or a UE, or may be a chip, a chip system or a processor supporting the network device to implement the above-mentioned method, or a chip, a chip system or a processor supporting the UE to implement the above-mentioned method. The device may be configured to implement the method as described in any of the method embodiments described above, with particular reference to the description of the method embodiments described above.

The communication device 1400 may include one or more processors 1401. The processor 1401 may be a general-purpose processor or a special-purpose processor. It may be, for example, a baseband processor or a central processor. The baseband processor may be configured to process a communication protocol and communication data, and the central processor may be configured to control a communication device (such as a base station, a baseband chip, a terminal, a terminal chip, a DU or a CU, etc.), executing a computer program and processing data of the computer program.

Optionally, the communication device 1400 may further include one or more memories 1402 on which the computer program 1404 may be stored, and the processor 1401 executing the computer program 1404 to cause the communication device 1400 to perform the method as described in the above method embodiments. Optionally, the memory 1402 may also have the data stored therein. The communication device 1400 and the memory 1402 may be provided independently or integrated together.

Optionally, the communication device 1400 may further include a transceiver 1405 and an antenna 1406. The transceiver 1405 may be referred to as a transceiving unit, a transceiver, or a transceiving circuit or the like for implementing a transceiving function. The transceiver 1405 may include a receiver and a transmitter, and the receiver may be referred to as a receiver or a receiving circuit or the like for implementing a receiving function; the transmitter may be referred to as a transmitter or a transmission circuit or the like for implementing a transmission function.

Optionally, the communication device 1400 may further include one or more interface circuits 1407. The interface circuit 1407 is configured to receive and transmit code instructions to the processor 1401. The processor 1401 executes the code instructions to enable the communication device 1400 to perform the method described in any of the above method embodiments.

In an implementation, the processor 1401 may further include the transceiver for implementing receiving and transmitting functions. For example, the transceiver may be a transceiving circuit, or an interface, or an interface circuit. The transceiving circuit, interface, or interface circuit for implementing the receiving and transmitting functions may be separate or integrated. The transceiving circuit, interface or interface circuit may be configured to read and write code/data, or the transceiver circuit, interface or interface circuit may be configured for transmission or transfer of signal.

In one implementation, the processor 1401 may store a computer program 1403, which runs on the processor 1401 and enables the communication device 1400 to perform the method described in the above method embodiments. The computer program 1403 may be fixed in the processor 1401, in which case the processor 1401 may be implemented by hardware.

In an implementation, the communication device 1400 may include a circuit that may perform the functions of transmitting or receiving or communicating in the foregoing method embodiments. The processor and transceiver described in the present invention may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and transceiver may also be fabricated with various IC process technologies such as complementary metal oxide semiconductor (CMOS), n-metal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device in the above embodiments may be the network device or the UE, but the scope of the communication device described in the present invention is not limited thereto. Moreover, the structure of the device may not be limited by FIG. 13. The communication device may be a stand-alone device or may be a part of a larger device. For example, the communication device may be: (1) a stand-alone integrated circuit (IC), or a chip, or a chip system or a subsystem; (2) a set of one or more ICs, optionally the set of ICs may also include a storage component for storing the data and the computer program; (3) ASIC such as modem; (4) modules that may be embedded in other devices; (5) a receiver, a terminal, an intelligent terminal, a cellular phone, a wireless device, a handset, a mobile unit, an on-vehicle device, a network device, a cloud device, an artificial intelligence device, etc.; (6) others.

In a case where the communication device may be the chip or the chip system, reference is made to the block diagram of the chip shown in FIG. 15. The chip shown in FIG. 15 includes a processor 1501 and an interface 1502. The numeric count of the processor 1501 may be one or more, and the numeric count of the interface 1502 may be more than one.

Optionally, the chip further includes the memory 1503 for storing necessary computer programs and data.

Those skilled in the art may further appreciate that the various illustrative logical blocks and steps described in embodiments of the present invention may be implemented in electronic hardware, computer software, or combinations of both. Whether such functionality is implemented as hardware or software depends upon particular application and design requirement of the overall system. Those skilled in the art may implement the described functionality in varying ways for each particular application, but such implementation should not be understood as exceeding the scope of protection of embodiments of the present invention.

The present invention further provides a readable storage medium having stored thereon instructions that, when executed by a computer, cause the function of any of the method embodiments described above to be implemented.

The present invention further provides a computer program product that, when executed by a computer, causes the function of any of the method embodiments described above to be implemented.

In the above embodiments, the present invention may be implemented in whole or in part by hardware, software, firmware or their combination. When implemented in software, the present invention may be implemented in whole or in part as the computer program product. The computer program product includes one or more computer programs. The computer programs, when loaded and executed on the computer, result in whole or in part in processes or functions according to embodiments of the present invention. The computer may be a general-purpose computer, a special-purpose computer, a computer network, or other programmable devices. The computer program may be stored in a computer-readable storage medium or transmitted from one computer-readable storage medium to another, for example, the computer program may be transmitted from one website, computer, server, or data center to another website, computer, server, or data center by wire (e.g. coaxial cable, fiber optic, digital subscriber line (DSL)) or wirelessly (e.g. infrared, wireless, microwave, etc.). The computer-readable storage medium may be any available medium that may be accessed by the computer or a data storage device, such as a server, a data center, etc., that includes one or more available media. The available medium may be a magnetic medium (e.g. a floppy disk, a hard disk, a magnetic tape), an optical medium (e.g. a high-density digital video disc (DVD)), or a semiconductor medium (e.g. a solid state disk (SSD)), etc.

Those skilled in the art may appreciate that the first, second, and other numerical numbers involved in the present invention are merely for convenience of description and are not intended to limit the scope of embodiments of the present invention, which also represent a sequential order.

Term "at least one" in the present invention may also be described as one or more, and "a plurality of" may be two, three, four, or more, and the present invention is not limited thereto. In embodiments of the present invention, regarding one technical feature, the technical features in the technical feature are distinguished by "first", "second", "third", "A", "B", "C" and "D", etc. and there is no order of precedence or order of magnitude between the technical features described by the "first", "second", "third", "A", "B", "C" and "D".

As used herein, terms "machine-readable medium" and "computer-readable medium" refer to any computer program product, apparatus, and/or device (e.g., disk, optical disk, memory, programmable logic device (PLD)) for providing machine instructions and/or data to a programmable processor, including a machine-readable medium that receives machine instructions as a machine-readable signal. The term "machine-readable signal" refers to any signal for providing machine instructions and/or data to the programmable processor.

The systems and technologies described herein may be implemented in a computing system (e.g., as a data server) including a background component, a computing system (e.g., an application server) including a middleware component, a computing system including a front-end component (e.g., a user computer having a graphical user interface or a web browser, through which the user may interact with embodiments of the systems and technologies described herein), or a computing system including any combination of such background component, middleware component, or front-end component). Components of the system may be connected to each other by digital data communication (such as a communication network) in any form or medium. Examples of the communication network include a local area network (LAN), a wide area network (WAN), and the Internet.

The computer system may include a client and a server. The client and the server are generally remote from each other and typically interact through the communication network. A client-server relationship is generated by computer programs operating on corresponding computers and having the client-server relationship with each other.

It should be understood that steps may be reordered, added or deleted using various forms of processes illustrated above. For example, each step described in the present invention may be executed in parallel, sequentially or in different orders, so long as a desired result of the technical solution disclosed in the present invention may be achieved, which is not limited here.

Furthermore, it should be understood that various embodiments of the present invention may be implemented alone or in combination with other embodiments, as the solution allows.

Those skilled in the art may appreciate that units and algorithm steps of each example described in conjunction with embodiments disclosed herein may be implemented with electronic hardware, or combinations of computer software and electronic hardware. Whether such functionality is implemented in hardware or software depends on the specific application and design constraints of the technical solution. Those skilled in the art may implement the described functionality in varying ways for each particular application, but such implementation should not be considered to be beyond the scope of the present invention.

It will be clear to those skilled in the art that, for convenience and brevity of the description, specific working procedures of the above described systems, devices and units may refer to corresponding procedures in the preceding method embodiments and will not be described in detail here.

The above description is only for the specific embodiments of the present invention, but the scope of the present invention is not limited thereto. Any person skilled in the art may easily think of changes or substitutions within the technical scope of the present invention, which shall be covered by the protection scope of the present invention. Therefore, the protection scope of the present invention shall be in line with the attached claims.

## Claims

1. A multi-path communication method, performed by a first user equipment (UE), comprising:
reporting measurement information to a network device via a direct path between the first UE and the network device; and
determining that a second UE enters a radio resource control (RRC) connected state, wherein the second UE is a relay UE, added by the network device, for the first UE according to the channel measurement information, and an indirect path between the first UE and the network device is established via the second UE.

2. The method according to claim 1, wherein determining that the second UE enters the RRC connected state comprises:
establishing a PC5 unicast connection with the second UE; and
instructing the second UE to enter the RRC connected state via the PC5 unicast connection.

3. The method according to claim 2, further comprising:
receiving, via the direct path, first indication information sent by the network device,
wherein the first indication information comprises RRC state information of the second UE.

4. The method according to claim 3, wherein determining that the second UE enters the RRC connected state comprises:
determining that the RRC state information of the second UE is an RRC non-connected state, and instructing the second UE to enter the RRC connected state via the PC5 unicast connection.

5. The method according to claim 2, further comprising:
receiving third indication information sent by the network device via the direct path,
wherein the third indication information comprises a trigger indication, and the trigger indication is configured to instruct the first UE to trigger the second UE to enter the RRC connected state.

6. The method according to any one of claims 2 to 5, wherein instructing the second UE to enter the RRC connected state via the PC5 unicast connection comprises:
sending PC5 RRC signaling or PC5 media access control control element (MAC CE) signaling to the second UE via the PC5 unicast connection, wherein the PC5 RRC signaling or the PC5 MAC CE signaling comprises second indication information for instructing the second UE to enter the RRC connected state.

7. A multi-path communication method, performed by a network device, comprising:
receiving, via a direct path between a first user equipment (UE) and the network device, measurement information reported by the first UE; and
determining a second UE to be added for the first UE according to the measurement information, wherein the second UE is a relay UE via which an indirect path between the first UE and the network device is established.

8. The method according to claim 7, wherein determining the second UE to be added for the first UE according to the measurement information comprises:
determining a second UE in a radio resource control (RRC) connected state according to the measurement information; and
adding the second UE in the RRC connected state for the first UE.

9. The method according to claim 7 or 8, further comprising:
sending first indication information to the first UE via the direct path,
wherein the first indication information comprises RRC state information of the second UE.

10. The method according to claim 9, wherein sending the first indication information to the first UE via the direct path comprises:
sending RRC signaling to the first UE via the direct path, wherein the RRC signaling comprises the first indication information.

11. The method according to claim 9 or 10, further comprising:
determining the RRC state information of the second UE, wherein the RRC state information comprises an RRC connected state and an RRC non-connected state, and the RRC non-connected state comprises an RRC idle state and an RRC inactivated state.

12. The method according to claim 7, further comprising:
sending third indication information to the first UE via the direct path,
wherein the third indication information comprises a trigger indication, and the trigger indication is configured to instruct the first UE to trigger the second UE to enter an RRC connected state.

13. The method according to claim 12, wherein sending the third indication information to the first UE via the direct path comprises:
sending RRC signaling to the first UE via the sidelink, wherein the RRC signaling comprises the third indication information.

14. A multi-path communication apparatus, comprising:
a transceiving module configured to report measurement information to a network device via a direct path between a first user equipment (UE) and the network device; and
a determining module configured to determine that a second UE enters a radio resource control (RRC) connected state, wherein the second UE is a relay UE, added by the network device, for the first UE according to the channel measurement information, and an indirect path between the first UE and the network device is established via the second UE.

15. A multi-path communication apparatus, comprising:
a transceiving module configured to receive, via a direct path between a first user equipment (UE) and a network device, measurement information reported by the first UE; and
a determining module configured to determine a second UE to be added for the first UE according to the measurement information, wherein the second UE is a relay UE via which an indirect path between the first UE and the network device is established.

16. A communication device, comprising:
a transceiver;
a memory; and
a processor, connected to the transceiver and the memory respectively, configured to execute computer-executable instructions stored on the memory to control radio signal reception and transmission of the transceiver, and to perform the method according to any one of claims 1 to 13.

17. A computer storage medium, having stored therein computer-executable instructions that, when executed by a processor, cause the method according to any one of claims 1 to 13 to be implemented.
